(19) Europäisches Patentamt

European Patent Office

Office européen des brevets

(11) **EP 1 076 392 A2**

(12) **EUROPÄISCHE PATENTANMELDUNG**

(43) Veröffentlichungstag:
**14.02.2001 Patentblatt 2001/07**

(51) Int. Cl.$^7$: **H02H 3/347**, H02H 1/00

(21) Anmeldenummer: **00111729.0**

(22) Anmeldetag: **02.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **12.08.1999 DE 19938315**

(71) Anmelder: **Moeller GmbH**
**53115 Bonn (DE)**

(72) Erfinder: **Zumbeck, Alexander**
**53347 Alfter (DE)**

(54) **Stromerfassungseinrichtung**

(57) Die Erfindung betrifft eine Stromerfassungseinrichtung umfassend einen Summenstromwandler (4) mit mindestens zwei Primärzweigen (42) und mindestens einer Sekundärwicklung (41), einen Operationsverstärker (2), und eine Impedanz (6), wobei die Sekundärwicklung (41) zwischen dem negativen Eingang (E1) des Operationsverstärkers (2) und einem Bezugspotential (GN) angeordnet ist, die Impedanz (6) zwischen dem Ausgang (A) des Operationsverstärkers (2) und dessen negativen Eingang (E1) angeordnet ist, und der Operationsverstärker (2) mit seinem positiven Eingang auf das Bezugspotential (GN) geführt ist.

*Fig.1*

Printed by Xerox (UK) Business Services
2.16.7 (HRS)/3.6

EP 1 076 392 A2

**Beschreibung**

Die Erfindung betrifft eine Stromerfassungseinrichtung, insbesondere zur Fehlerstromüberwachung in elektrischen oder elektronischen Schaltgeräten wie Leistungsschaltern, Fehlerstromschutzschaltern oder dergleichen.

Aus der Druckschrift EP 0 590 435 A2 ist eine Fehlerstromerfassungseinrichtung bekannt, deren Sekundärwicklung des Summenstromwandlers zum Zwecke der Scherung der Magnetisierungskennlinie mit einem Bebürdungswiderstand parallel beschattet ist. Hierdurch wird in Abhängigkeit vom Widerstandswert des Bebürdungswiderstands die Scherung der Magnetisierungskennlinie beeinflußt. Problematisch ist hierbei, daß mit steigender Bebürdung (Verringerung des Bebürdungswiderstandswertes) die Steigung der Magnetisierungskennlinie abfällt und somit die sich ergebenden Amplituden der Induktionshübe verkleinern.

Der Erfindung liegt daher die Aufgabe zugrunde, eine Stromerfassungseinrichtung der eingangs genannten Art derart zu verbessern, daß diese im Hinblick auf Gleichfehlerströme unempfindlicher gegenüber einer Gleichstrommagnetisierung ist.

Erfindungsgemäß wird die Aufgabe durch die Merkmale des unabhängigen Anspruches gelöst, während den abhängigen Ansprüchen vorteilhafte Weiterbildungen der Erfindung zu entnehmen sind.

Gemäß der Erfindung wird der Summenstromwandler sekundärseitig mit einem niederohmigen, als invertierende Operationsverstärkerschaltung aufgebauter Strom/Spannungswandler bebürdet.

Der verwendete Summenstromwandler besteht mit Vorteil aus einem metallischen Ringkern (Magnetkern) mit einer Spule (Sekundärspule) zur Erfassung von gegebenenfalls auftretenden Magnetfeldänderungen. Bei derartigen Wandlereinrichtungen werden in der Regel drei Phasenleiter (L1 L2, L3) und ein Sternpunktleiter (N) durch den Ringkern des Summenstromwandlers geführt, wobei im Betrieb ohne Fehler die Summe aller Ströme Null ergibt und erst in einem Fehlerfall, ein von Null verschiedener Stromwert sich einstellt.

In einer bevorzugten Ausführungsform der Erfindung wird der verwendete Operationsverstärker über einen ohmschen Widerstand auf den invertierenden Operationsverstärkereingang rückgekoppelt und mit seinem nichtinvertierenden Eingang auf ein Bezugspotioal, vorzugsweise Massepotential, geführt. Der Summenstromwandler wird erfindungsgemäß als Stromquelle betrieben, wofür der Innenwiderstand der Sekundärspule deutlich größer ausgeführt ist, als der Eingangswiderstand der Operationsverstärkerschaltung. Bei diesem Schaltungsaufbau bildet der invertierende Operationsverstärkereingang einen virtuellen Massepunkt, so daß die Sekundärspule bei annähernder Betrachtung im Kurzschluß betrieben wird, also mit einem gegen Null gehenden Widerstand bebürdet ist, obwohl keine niederohmige Verbindung zum Massepotential besteht. Andererseits wird, aufgrund des gegen unendlich gehenden Innenwidertandes des Operationsverstärkers, der in die Sekundärspule induzierte Meßstrom nahezu gänzlich über den Rückkopplungswiderstand geführt, so daß über den als Meßwiderstand dienenden Rückkopplungswiderstand ein nahezu fehlerfreier Wert für den erfaßten Fehlerstrom gewonnen wird. Hierdurch wird die Linearität des Meßsignals deutlich erhöht, ohne die Amplituden der Induktionshübe (Auflösung des Meßsignals) wesentlich zu verringern. Desweiteren wird die Sättigungsgrenze des Summenstromwandlers bei gleichbleibendem Eisenkernquerschnitt und gleichem Eisenkernmaterial erhöht. Oder es kann bei vorgegebener Sättigungsgrenze des Summenstromwandlerkerns und vorgegebenem Material der Summenstromwandler in kleinerer Bauweise realisiert werden oder aber bei vorgegebener Sättigungsgrenze und vorgegebenem Bauvolumen ein minderwertigeres und damit preiswerteres Material verwendet werden. In weiteren Ausführungsformen kann anstelle eines ohmschen Widerstandes in den Rückkolplungszweig des Operationsverstärkers eine Impedanz zum Beispiel in Form einer Induktivität oder einer Kapazität geschaltet werden.

Weitere Einzelheiten und Vorteile der Erfindung ergeben sich aus dem folgenden, anhand von Figuren erläuterten Ausführungsbeispiel. Es zeigen

Figur 1:  eine mögliche Ausführungsform der erfindungsgemäßen Fehlerstromerfassungseinrichtung;

Figur 2 und 3:  Prinzipdiagramme des Magnetisierungsverhaltens eines Summenstromwandlers bei unterschiedlicher Bebürdung; und

Figur 4:  Diagramm des Magnetisierungsverhaltens eines Summenstromwandlers mit Bebürdung gemäß der Erfindung.

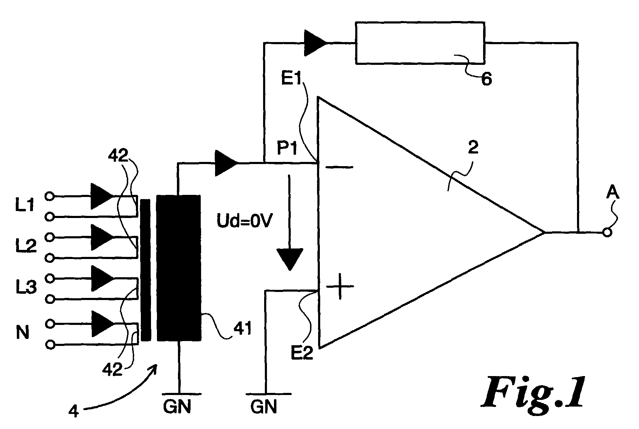

Nach Fig. 1 besteht die erfindungsgemäße Fehlerstromerfassungseinrichtung in einer bevorzugten Ausführungsform aus einem ausgangsseitigen Operationsverstärker 2, der an seinem invertierenden Eingang E1 mit der Sekundärspule 41 eines Summenwandlers 4 gegen Bezugspotential, insbesondere Massepotential GN, beschaltet ist, der über einen Rückkopplungswiderstand 6 vom Ausgang A auf seinen invertierenden Eingang E1 rückgeführt ist, und der an seinem nichtinvertierenden Eingang E2 ebenfalls auf Bezugspotential GN geführt ist.

In weiteren Ausführungsformen ist vorgesehen, anstelle des ohmschen Rückkopplungswiderstandes 6 andere Impedanzen, wie Spulen oder Kondensatoren zu verwenden.

Über das Übersetzungsverhältnis von Primärzweigen (gebildet zum Beispiel durch die durch einen Ringkern des Summenstromwandlers verlaufenden Leitungen L1, L2, L3, N oder durch entsprechende Spulenanordnungen) zu Sekundärspule ( ü=n1/n2 ) wird ein Abbild der vektoriellen Summe aller Phasenströme (einschließlich Nulleiterstrom) im Summenstromwandler 4 gebildet. Damit im Fehlerfall ein Erschlußsignal als eingeprägter Strom realisierbar ist, muß der Summenstromwandler als Stromquelle betrieben werden. Hierfür ist der Innenwiderstand der Sekundärspule 41 erheblich größer als der Eingangswiderstand der Operationsverstärker-Schaltung zu wählen.) Der Summenstromwandler 4 ist mit einem niederohmigen Strom-/Spannungswandler bebürdet, der wie oben beschrieben in einer Operationsverstärkerschaltung aufgebaut ist. Hierbei ist der Summenstromwandler 4 zwischen Massepotential GN und dem virtuellen Massepunkt P1 der Verstärkerschaltung angeordnet. Durch diese Beschaltung erfährt der Summenstromwandler 4 nahezu keine Gegenspannung, so daß er bei idealisierter Betrachtung sozusagen im Kurzschluß betrieben wird. Hierdurch wird der Vorteil erreicht, daß sich die Schaltungsanordnung bis zur Sättigungsgrenze des Eisenkerns des Summenstromwandlers 4 absolut linear verhält. Um die Eingangsströme des Operationsverstärkers 2 und damit eventuell auftretende Meßfehler zu minimieren wird mit Vorteil ein Operationsverstärker 2 verwendet, der als Eingangsstufen hochohmige FET-Transistorstufen enthält.

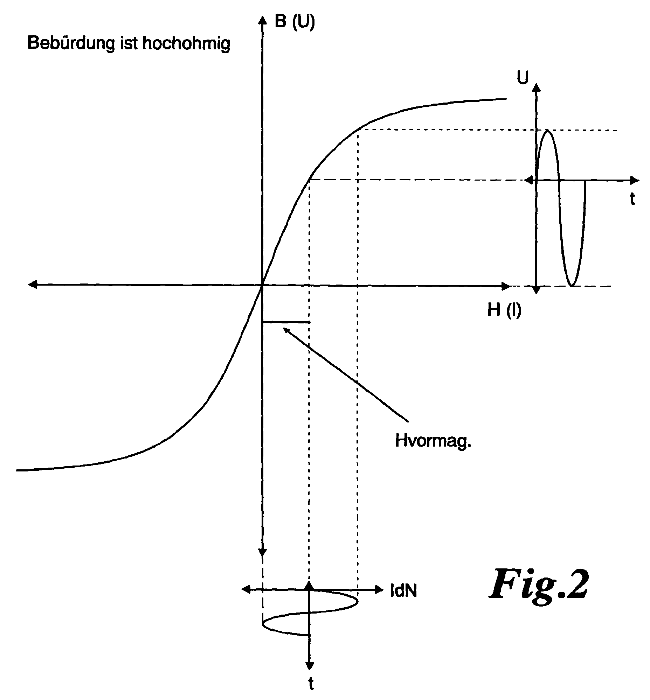

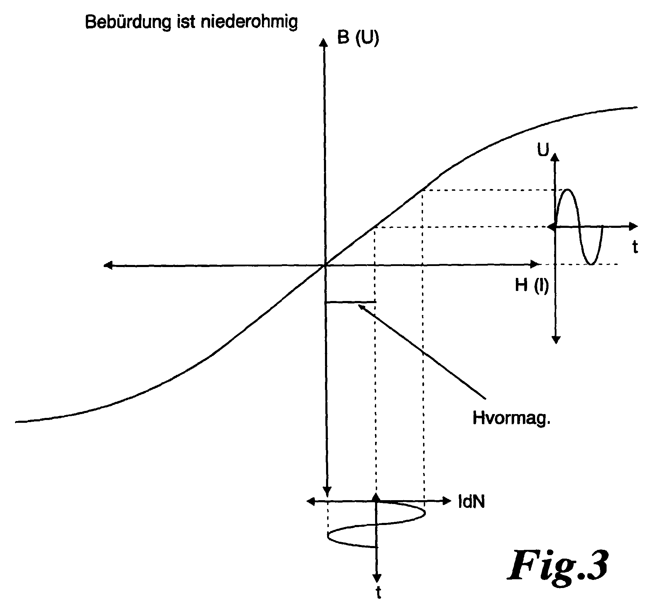

Die Figuren 2 und 3 zeigen Prinzipdiagramme des Magnetisierungsverhaltens eines Summenstromwandlers bei unterschiedlicher Bebürdung. Anhand dieser Figuren wird deutlich, welch immense Bedeutung eine optimierte Linearisierung der Magnetisierungskennlinie, unter Beibehaltung einer gewissen Kennliniensteigung für die Übertragung eines Signals hat. Ein in einem Primärzweig 42 gegebenenfalls auftretender Fehlerstrom wird über den Summenstromwandler 4 gemäß der dargestellten Kennlinien übertragen. Der in der Sekundärspule hierdurch erzeugte Strom wird aufgrund des hohen Innenwiderstandes des Operationsverstärkers nahezu komplett über den Rückkopplungswiderstand 6 geführt und erzeugt hier die zum Fehlersignal proportionale Meßspannung. Die Meßspannung wird anschließend über den Ausgang des Operationsverstärkers an eine Ausweteschaltung (analog oder digital) weitergeleitet wo hieraus in Abhängigkeit vorgegebener Kriterien zum Beispiel ein Auslöse- oder Meldesignal für den Auslöser beziehungsweise die Anzeigemittel eines elektrischen Schutzschaltgerätes generiert wird.

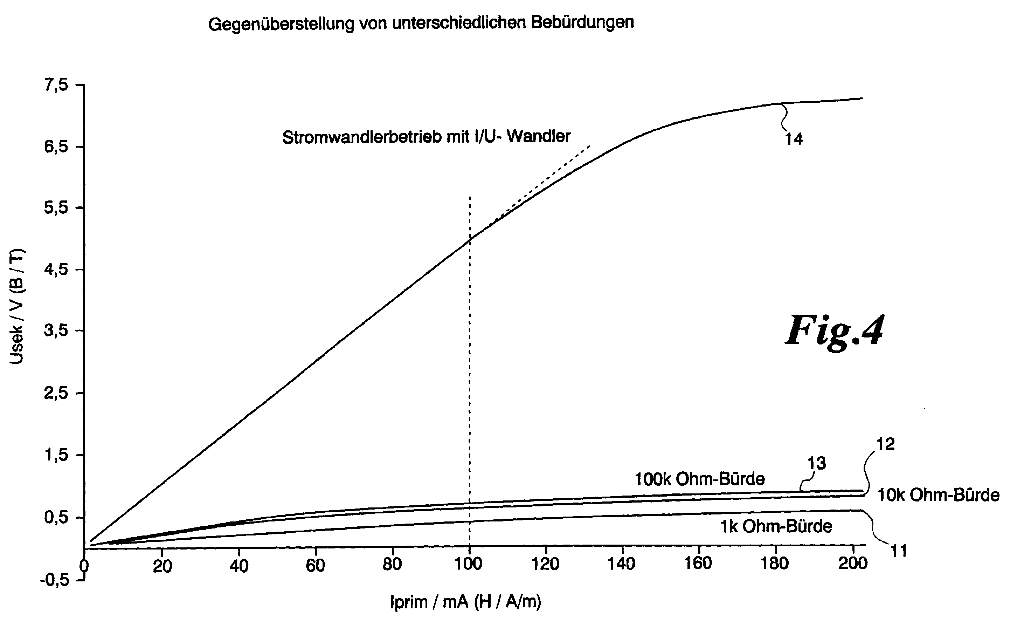

In Figur 4 sind Ausschnitte von Magnetisierungskennlinien (Meßspannungskennlinien; U(I)) dargestellt mit unterschiedlichen Bebürdungen der Sekundärspule eines Summenstromwandlers. Die Kennlinien 11, 12 und 13 zeigen Kennlinienauschnitte der Magnetisierungskennlinie (Meßspannungskennlinie) eines Summenstromwandler bei einer Bebürdung von 1kOhm, 10 kOhm und 100 kOhm. Die Kennlinie 14 zeigt einen Kennlinienauschnitt des Summenstromwandlers 4 mit einer Bebürdung gemäß der Erfindung. Hieraus ist deutlich errichtlich, das durch die erfindungsgemäße Bebürdung ein Kennlinienverhalten realisierbar ist, welches im Hinblick auf Linearität und einstellbare Kennliniensteigung stark optimiert worden ist.

Wird die Rückkopplungsimpedanz (R, L oder C) verstellbar ausgeführt, ist auf einfache Weise die Steigung der Kennlinie 14 einstellbar.

## Patentansprüche

1. Stromerfassungseinrichtung umfassend

   - einen Summenstromwandler (4) mit mindestens zwei Primärzweigen (42) und mindestens einer Sekundärwicklung (41),
   - einen ausgangsseitigen Operationsverstärker (2), und
   - eine Impedanz (6), wobei
   - die Sekundärwicklung (41) zwischen dem negativen Eingang (E1) des Operationsverstärkers (2) und einem Bezugspotential (GN) angeordnet ist,
   - die Impedanz (6) zwischen dem Ausgang (A) des Operationsverstärkers (2) und dessen negativen Eingang (E1) angeordnet ist, und
   - der Operationsverstärker (2) mit seinem positiven Eingang auf das Bezugspotential (GN) geführt ist.

2. Stromerfassungseinrichtung nach Anspruch 1, **dadurch gekennzeichnet,** daß die Impedanz (6) als ohmscher Widerstand ausgebildet ist.

3. Stromerfassungseinrichtung nach Anspruch 1 oder 2, **dadurch gekennzeichnet,** daß die Impedanz (6) regelbar ist.

4. Stromerfassungseinrichtung nach einem der vorherigen Ansprüche, **dadurch gekennzeichnet,** daß der Operationsverstärker (2) Eingänge mit hochohmigen Feldeffekt-Transistorstufen aufweist.

*Fig.1*

Bebürdung ist hochohmig

*Fig.2*

Bebürdung ist niederohmig

B (U)

U

t

H (I)

Hvormag.

IdN

t

*Fig.3*

Gegenüberstellung von unterschiedlichen Bebürdungen

Fig.4

Usek / V (B / T) (y-axis)

Iprim / mA (H / A/m) (x-axis)

Stromwandlerbetrieb mit I/U- Wandler — 14

100k Ohm-Bürde — 13

10k Ohm-Bürde — 12

1k Ohm-Bürde — 11

EP 1 076 392 A2